# EUROPEAN PATENT SPECIFICATION

(11) **EP 1 082 195 B1**
(45) Date of publication and mention of the grant of the patent: **27.08.2003**
(21) Application number: 99918225.6
(22) Date of filing: 20.05.1999
(51) Int. Cl.: B24D 3/34, B24D 5/12, B23D 47/00, B23D 61/02, B24B 45/00

(54) **CUTTING DISK WITH VIBRATION DAMPING SHEET**
SCHNEIDESCHEIBE MIT SCHWINGUNGSDÄMPFENDER FOLIE
DISQUE DE COUPE AVEC FEUILLE D'AMORTISSEMENT DE VIBRATIONS

(30) Priority: 26.05.1998 IT PR980035
(43) Date of publication of application: 14.03.2001
(73) Proprietor: Porfidi International S.r.L, 38045 Civezzano (TN) (IT)
(72) Inventor: PARETI, Vittorio, I-37180 Verona (IT)
(74) Representative: Ghioni, Carlo Raoul Maria
(86) International application number: IB9900901
(87) International publication number: WO99061204

(56) References cited:
- EP-A- 0 523 260
- US-A- 3 793 783
- US-A- 5 408 983
- PATENT ABSTRACTS OF JAPAN vol. 095, no. 004, 31 May 1995 (1995-05-31) -& JP 07 009346 A (OSAKA DIAMOND IND CO LTD), 13 January 1995 (1995-01-13)

## Description

The present invention relates to a cutting disk presenting a vibration dumping sheet

Diamond disks are known, comprising a steel or aluminium disks on whose peripheral area is secured, by means of known welding technique, a crown of diamond covered plates.

Said disks are made to rotate at a high number of rotations per minute and are used to cut the most disparate products such as rocks, concrete, tiles made of any material and construction materials in general.

Also known are steel disks for cutting wood, glass, iron, which present a peripheral crown of teeth conformed as a saw or with plates of hard metal, such as vidia, secured thereon.

It has been noted that traditional steel or aluminium cutting disks, be they intended for construction materials or for iron, wood, etc., develop magnetic and sound waves which cause vibrations.

The vibrations, in addition to creating a deafening noise, considerably influence the operating temperature of the disk and thus greatly reduce its mechanical resistance.

Said disks are subject to different kinds of deformations which lead to the breakage or detachment of the diamond plates or of the teeth with the consequent considerable risk for the operator and for the treated product.

The abstract of the japanese patent application n.5161526 shows a base board obtained by laminating plural carbon fabric fibres. By fixing on said base board a layer of superabrasive grain is formed a superabrasive grain grinding wheel. The use of carbon fibers layers is in connection with the aim to obtain a rigid base board having an even displacement in all directions during the grinding.

The US-Patent n. 5 408 983 shows a saw which has not, as usual, a steel blade, but a blade which is composed of a synthetic plastic material reinforced with a fiber material composed of a plurality of fibers selected from the group consisting of carbon fibers and graphite fibers with a volume fraction of 30-70%. The presence of the carbon fibers and of the graphite fibers should give the necessary rigidity to the synthetic plastic material. They also may contribute to noise adsorption.

The european patent n. 0 523 260 shows a saw blade for circular saws or cutting disks composed of synthetic plastic material reinforced with fibers. The presence of the fibers should render more rigid the blade composed of synthetic plastic material. For this purpose the fibers are embedded in the synthetic plastic material according to a radial orientation which is uniformly distributed along the edge of the body.

The US patent n. 3 793 783 shows a grinding wheel having identical, interchangeable and replaceable cut-off segnients. Every segment has a composite structure composed of a thin base member, an abrasive member and of at least a layer of reinforcing material. The structure of said wheel should a easy re-use when some abrasive segments are weared out and they should be replaced.

The aim of the present invention is to eliminate or rather stop the formation of said waves and thereby prevent the known disk made of steel or metal from experiencing overheating phenomena.

Another aim is to improve, in the case of diamond disks, the work of the diamond both from the standpoint of the cut and of execution times.

This and other aims are all attained by the cutting disk that is characterised as stated in the claims 1-6, and in particular in that it comprises on both faces a vibration damping sheet, which comprises one or more layers of fabric made of carbon fibre or carbon fibre combined with other synthetic fibres such as glass on at least one face of said sheet being applied a layer of adhesive suitable stably to secure said sheet to the steel or metal disk.

This and other features will become more readily apparent from the description that follows of a preferred form of embodiment illustrated, purely by way of non limiting example, in the accompanying drawing plate, wherein:
- Figure 1 shows the circular shaped sheet in a perspective view,
- Figure 2 shows a cross section of the sheet and the cutting disk.

With reference to the figures, the number 1 indicates in its entirety a circular shaped sheet with a central hole 2.

The sheet is formed by one or more layers 3 of carbon fibre fabric to form an overall thickness of 2 - 8 tenths of millimetre, in any case of such thickness as not to exceed the thickness of the diamond plate 10 or of the tooth of a metal disk 11 whereto said sheet shall be applied.

On at least one of the two faces of the sheet, an adhesive layer 4 is applied, covered with a sheet 5 of paper or hardboard. Removing the hardboard 5, the sheet 1 can be attached to one of the faces of the steel disk thereby forming a single body therewith. Another sheet 1 must be applied to the other face of the disk.

The thickness of the sheet 1 and the type of fibre employed for its realisation shall be determined according to the type of metal whereof the disk is made and also to its operative application.

Each layer of fabric can alternatively be realised with carbon fibre combined with glass fibre or with carbon fibre mixed with Kevlar fibre.

In the case of fabric with combined fibres, the carbon fibres can be oriented differently from the orientation of the glass or Kevlar fibres.

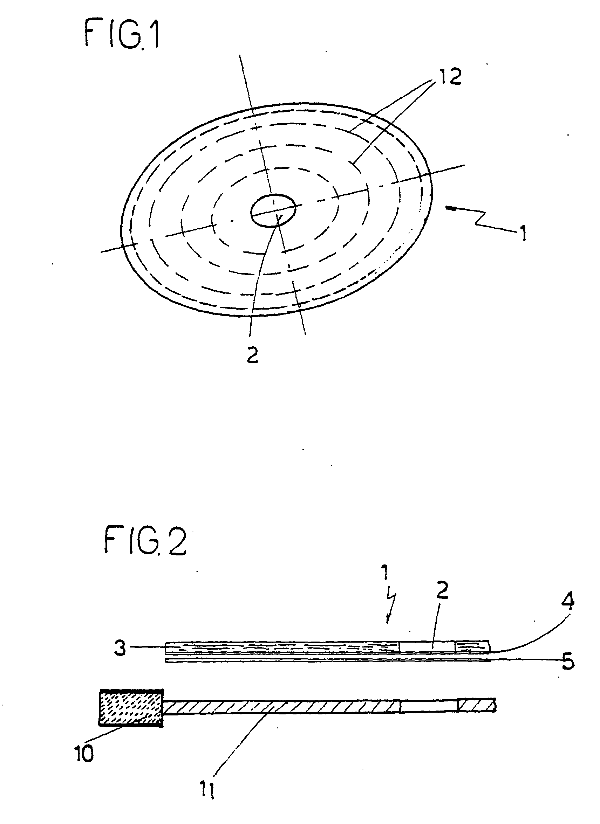

Since the diameters of cutting disks have been standardised, the sheet may have a diameter equal to the diameter of the disk inside the diamond plates or the teeth, but it may be realised as shown in Figure 1, with a diameter equal to the maximum diameter of the cutting disks with weakening and ripping lines 12 along circumferences corresponding to the other smaller commercially available diameters.

This allows to market a single universal sheet to be adapted directly by the consumer upon applying the sheet to the disk.

The one or more layers 3 of fabric may be impregnated with a two-component resin.

## Claims

1. Cutting disk made of metal (11), having on his peripheral area a crown of diamond covered plates on teeth (10) which are able to cut an object when the cutting disk is made to rotate at a high number of rotations per minute **characterised in that** it comprises on both faces a vibration damping sheet, which comprises one or more layers (3) of carbon fibre fabric, on a face of said vibration damping sheet (1) being provided a layer of adhesive (4) able to adhere to the surface of the metal cutting disk (11).

2. Cutting disk according to claim 1, **characterised in that** the vibration damping sheet (1) comprises one or more layers (3) of fabric made of carbon fibre and glass fibre, the two types of fibres being oriented differently.

3. Cutting disk according to claim 1, **characterised in that** the vibration dumping sheet (1) comprises one or more layers (3) of fabric made of carbon fibre and Kevlar fibre, the two types of fibre being differently oriented.

4. Cutting disk according to claim 1, **characterised in that** the vibration dumping sheet (1) comprises one or more layers (3) of fabric made of glass fibre.

5. Cutting disk according to one or more of the previous claims, **characterised in that** the vibration dumping sheet presents a thickness such that, once applied to the disk, it does not exceed the thickness of the tooth or of the diamond plate (10).

6. Cutting disk according to one or more of the previous claims, **characterised in that** the vibration dumping sheet presents a circular shape with a diameter equalling that of the disk inside the diamond plates or the teeth.

## Patentansprüche

1. Schneidescheibe (11) aus Metall, die auf ihrem Umfangsbereich einen Kranz von diamantbesetzten Plättchen oder Zähnen (10) besitzt, die fähig sind, einen Gegenstand zu schneiden, sobald man die Schneidescheibe mit einer hohen Drehzahl pro Minute umlaufen lässt, **dadurch gekennzeichnet, dass** sie an beiden Stirnflächen eine schwingungsdämpfende Folie umfasst, die eine oder mehrere Lagen (3) eines Gewebes aus Kohlenfasern umfasst, wobei auf einer der Stirnflächen der schwingungsdämpfenden Folie (1) eine Klebeschicht (4) vorgesehen ist, die geeignet ist an der Oberfläche der Schneidescheibe (11) aus Metall anzuhaften.

2. Schneidescheibe nach Anspruch 1, **dadurch gekennzeichnet, dass** die schwingungsdämpfende Folie (1) eine oder mehrere Lagen (3) eines Gewebes aus Kohlenfasern und aus Glasfasern umfasst, wobei die beiden Fasernarten verschieden ausgerichtet sind.

3. Schneidescheibe nach Anspruch 1, **dadurch gekennzeichnet, dass** die schwingungsdämpfende Folie (1) eine oder mehrere Lagen (3) eines Gewebes aus Kohlenfasern und Kevlarfasern umfasst, wobei die beiden Fasernarten verschieden ausgerichtet sind.

4. Schneidescheibe nach Anspruch 1, **dadurch gekennzeichnet, dass** die schwingungsdämpfende Folie eine oder mehrere Lagen (3) eines Gewebes aus Glasfasern umfasst.

5. Schneidescheibe nach einem oder mehreren voranstehenden Ansprüchen, **dadurch gekennzeichnet, dass** die schwingungsdämpfende Folie eine derartige Stärke aufweist, dass sie, nachdem sie an der Scheibe angebracht ist, die Stärke des Zahns oder der diamantenbesetzten Plattchen (10) nicht überschreitet.

6. Schneidescheibe nach einem oder mehreren voranstehenden Ansprüchen, **dadurch gekennzeichnet, dass** die schwingungsdämpfende Folie eine kreisförmige Ausbildung mit einem Durchmesser aufweist, der dem Durchmesser der Scheibe innerhalb der diamantenbesetzten Plättchen oder der Zähne gleich ist.

## Revendications

1. Disque de coupe métallique (11) présentant sur sa zone périphérique une couronne de plaquettes diamantées ou dents (10), lesquelles peuvent couper un objet lorsque le disque de coupe est entraîné en rotation à un nombre élevé de tours par minute, **caractérisé en ce qu'**il comprend sur les deux faces une feuille anti-vibrations, laquelle comprend une ou plusieurs couches (3) de tissu en fibres de carbone, sur une face de ladite feuille anti-vibrations (1) étant prévue une couche d'adhésif (4) pour adhérer à la surface du disque de coupe métallique (11).

2. Disque de coupe selon la revendication 1, **caractérisé en ce que** la feuille anti-vibrations (1) comprend une ou plusieurs couches (3) de tissu en fibre de carbone et fibre de verre, les deux types de fibres étant différemment orientés.

3. Disque de coupe selon la revendication 1, **caractérisé en ce que** la feuille anti-vibrations (1) comprend une ou plusieurs couches (3) de tissu de fibre de carbone et fibre Kevlar, les deux types de fibres étant différemment orientés.

4. Disque de coupe selon la revendication 1, **caractérisé en ce que** la feuille anti-vibrations comprend une ou plusieurs couches (3) de tissu de fibre de verre.

5. Disque de coupe selon une ou plusieurs des revendications précédentes, **caractérisé en ce que** la feuille anti-vibrations présente une épaisseur telle que, un fois appliquée sur le disque, elle ne dépasse pas l'épaisseur de la dent ou de la plaquette diamantée (10).

6. Disque de coupe selon une ou plusieurs des revendications précédentes, **caractérisé en ce que** la feuille anti-vibrations présente une forme circulaire avec un diamètre identique au diamètre du disque à l'intérieur de la plaquette diamantée ou des dents.
